# EUROPEAN PATENT SPECIFICATION

(11) **EP 2 735 553 B1**
(45) Date of publication and mention of the grant of the patent: **05.04.2017**
(21) Application number: 12306468.5
(22) Date of filing: 27.11.2012
(51) Int. Cl.: C04B 2/10, B01D 53/62, C01B 33/20, C01D 7/00, C01F 5/24, C01F 5/06, C01F 5/14

(54) **PROCESS FOR THE TREATMENT OF A SILICATE MINERAL**
VERFAHREN ZUR BEHANDLUNG EINES SILIKATMINERALS
PROCÉDÉ DE TRAITEMENT D'UN MINÉRAL SILICATÉ

(43) Date of publication of application: 28.05.2014
(73) Proprietor: LAFARGE, 75116 Paris (FR)
(72) Inventor: Gartner, Ellis, 38291 Saint Quentin Fallavier (FR); Pisch, Alexander, 38291 Saint Quentin Fallavier (FR); Meyer, Vincent, 38291 Saint Quentin Fallavier (FR)
(74) Representative: Keschmann, Marc

(56) References cited:
- EP-A1- 2 508 496
- EP-A1- 2 532 624
- WO-A1-2007/069902
- WO-A1-2009/156740
- WO-A2-2010/097451
- CA-A1- 1 189 288
- US-A- 5 085 838
- US-A- 6 054 106
- US-A1- 2004 213 705
- US-A1- 2012 291 675
- O'CONNOR W K ET AL: "Carbon dioxide sequestration by direct mineral carbonation: process mineralogy of feed and products", MINERALS AND METALLURGICAL PROCESSING,, vol. 19, no. 2, 1 May 2002 (2002-05-01), pages 95-101, XP002994928, ISSN: 0747-9182

## Description

This invention relates to a process for the treatment of a silicate mineral, The process uses as starting material a magnesium silicate and produces an alkali metal magnesium orthosilicate and magnesium oxide each of which can be isolated or subjected to further treatment to produce other products.

US5085838 discloses preparation of a product comprising an alkali metal magnesium orthosilicate and a magnesium oxide, in which an alkali metal carbonate compound is reacted with a magnesium silicate.

US2012291675 and US2004213705 describe processes for the sequestration of CO2 WO20070159902 discloses a method for industrial manufacture of pure MgCO3 from an olivine containing species of rock.

XP2994928 describes a process where sodium bicarbonate, sodium chloride and water are mixed with magnesium silicates.

Magnesium silicate rocks make up the majority of the Earth's mantle, and large surface deposits of such rocks are also found in many locations. The composition of the Earth's mantle is about 70% basic magnesium orthosilicate (Mg₂SiO₄), and, when this material is found in crystalline form close to the Earth's surface, it is generally in the form of olivine, which is essentially a solid solution between forsterite (pure Mg₂SiO₄) and fayalite (pure Fe₂SiO₄), representing the two main components of the Earth's mantle. In the Earth's crust, in addition to olivine, anhydrous magnesium silicates also occur as pyroxenes, such as enstatite (MgSiO₃). Due to the action of water, either at the surface or at depth within the Earth's crust, anhydrous magnesium silicates are converted into common magnesium silicate hydrate minerals such as serpentine (with the idealised overall composition Mg₃Si₂O₅(OH)₄), and also talc (with the idealised overall composition (Mg₃Si₄O₁₀(OH)₂). Magnesium silicate rocks constitute an excellent source of two important elements, magnesium and silicon, in their oxide forms (MgO and SiO₂). Processes to extract these two oxides from such rocks have heretofore been excessively energy-intensive and thus have not been commercialized.

Although the magnesium silicate minerals tend to be very "unreactive," (e,g. in that they have high melting points and also dissolve only very slowly in water or dilute acids), it is known that they will react rapidly with molten alkali metal carbonates, such as sodium carbonate (Na₂CO₃). Such a process, commonly referred to as a "carbonate fusion", is often used in the preparation of minerals for chemical analysis. Generally, a large excess of solid alkali metal carbonate (typically at least ten parts of alkali metal carbonate to one part of magnesium silicate rock) is added and the mixture heated to well above the melting point of the alkali metal carbonate. The magnesium silicate completely dissolves in the resulting melt, which after cooling, can easily and rapidly be dissolved in a strong aqueous acid and the solution then analyzed by standard chemical techniques, thus allowing for total elemental analysis of the rock The carbonate fusion process is a small scale process; it is analytical, not preparative, and is not energy-efficient as it involves melting a large excess of alkali metal carbonate in order to fully dissolve the magnesium silicate.

The term sodium magnesium silicate is sometimes used, in accordance with the International Nomenclature of Cosmetic Ingredients (INCI) to identify synthetic hectorites in the form of nanoparticles and which form clear gels in water According to one manufacturer of such products hectorites have the formula (Mg_{5.2}Li_{0.8})(Si₈)O₂₀(OH)₄Na_{0.8}.

The present invention seeks to provide a process for the production from magnesium silicate rock of alkali metal magnesium orthosilicate and magnesium oxide and/or alkali metal silicates which can be used subjected to chemical to capture carbon dioxide (CO₂) and which can be subjected to further treatments to produce a number of useful products.

The present invention accordingly provides a process for the treatment of a silicate mineral comprising a first step of preparation of a first product comprising an alkali metal magnesium orthosilicate of the general formula R₂MgSiO₄ wherein R represents an alkali metal, and magnesium oxide which process comprises the reaction, at a temperature from 500 to 200°C, of an alkali metal carbonate compound, which compound is an alkali metal carbonate, an alkali metal bicarbonate or a mixture thereof, with a magnesium silicate, the molar ratio of alkali metal carbonate compound, expressed as alkali metal oxide of the formula R₂O, in which R represents an alkali metal, to magnesium silicate, expressed as silicon dioxide, of the formula SiO₂, being from 4:1 to 1:4_{,} a second step of contacting the first product with water to produce a second product by hydrating the magnesium oxide to magnesium hydroxide and to partially dissolve the alkali metal magnesium orthosilicate, and a third step of isolating or producing magnesium oxide, magnesium hydroxide from the second product.

The molar ratio of alkali metal carbonate compound, expressed as alkali metal oxide, to magnesium silicate, expressed as silicon dioxide, is preferably from <4:1 to 1:4, more preferably from 3:1 to 1:3, for example 2:1 to 1:2. The ratio is most preferably about 1.

The alkali metal is preferably potassium or, more preferably, sodium.

The alkali metal carbonate compound is preferably an alkali metal carbonate. It will be understood that when the alkali metal carbonate compound comprises bicarbonate the latter will generally decompose to the corresponding carbonate at the temperatures used in the process of the invention.

The alkali metal carbonate compound may be anhydrous or hydrated. Hydrates of sodium carbonate include the monohydrate and decahydrate. Hydrates of potassium carbonate include the sesquihydrate (also known as hemihydrate). It is preferable, when economically feasible, to use anhydrous alkali metal carbonate compounds to avoid the expenditure of energy required to remove water of hydration.

The magnesium silicate used in the process of the invention is generally a mineral silicate, for example a rock comprising a high concentration, preferably 20% or more, more preferably 50% or more, of a magnesium silicate of general composition:

m(MgO)•t(QO)•SiO₃•xH₂O

wherein m is from 1 to 3, t is less than or equal to 1, and x is from zero to 2: and Q represents a metal or metals other than magnesium, (for example calcium and/or a transition group metal such as iron, chromium or nickel). It will be understood that the composition or formulae of minerals is often depicted in terms of the theoretical amount of oxides which they contain: the oxides are, however, not present as such in the minerals whose composition is depicted in this way.

Such minerals include olivines, e.g. forsterite and monticellite; serpentines, e.g. antigorite, chrysotile, lizardite, sepiolite and garnierite; pyroxenes, e.g. enstatite, diopside, bronzite and hypersthene; amphiboles, e.g. amosite, anthophyllite, tremolite and actinolite; humites, e.g. chondrodite and norbergite; and other minerals such as chlorite, talc, iddingsite and hectorite. These minerals may contain substantial quantities of iron in addition to magnesium and silicon, and also significant amounts of calcium, aluminium and alkali metals,

Asbestos comprises a group of naturally occurring minerals which includes fibrous serpentine (e.g. chrysotile) and amphibole (e.g. amosite, arlthophyllite, tremolite and actinolite) minerals. The fibrillar forms of asbestos are known to be harmful to health and are considered to be human carcinogens The process of the invention provides a means of converting these minerals into useful (and non-carcinogenic) materials.

The mineral silicate used in the process of the invention is preferably a magnesium silicate. The MgO/SiO₂ molar ratio is 1-3. The CaO/SiO₂ molar ratio is preferably ≤0.5. The FeO/SiO₂ molar ratio is preferably ≤0.5. The content of other elements in terms of the (total oxides)/SiO₂ molar ratio is preferably ≤0.2.

The alkali metal carbonate compound used in the process of the invention may be a mineral, for example trona (tri-sodium hydrogen dicarbonate dihydrate; Na₃H(CO₃)₂•2H₂O), or a commercially available compound. It may contain impurities, for example hydroxides and silicates and, generally in smaller amounts, other impurities, e.g chlorides, sulfates, sulphites, nitrates and nitrites. If impurities (e.g. alkali metal nitrates or hydroxides) are present which, at the temperature used in the process of the invention, decompose to an alkali metal oxide, they should be taken into account when calculating the amount of alkali metal oxide.

The process of the invention is preferably effected at a temperature from 600 to 1100°C, more preferably from 800 to 1000°C. Heating is generally effected for a few minutes to a few hours.

The process is preferably effected at a temperature at which the magnesium silicate is solid and the alkali metal carbonate corresponding to the alkali metal carbonate compound is solid or liquid.

According to a feature of the invention the process is effected at a temperature below the melting point of the alkali metal carbonate corresponding to the alkali metal carbonate compound.

We have found, unexpectedly, that it is possible to obtain a high degree of reaction between an alkali metal carbonate compound, preferably an alkali metal carbonate, and a magnesium silicate when the two materials are contacted with each other in the solid state. They are preferably in particulate form, for example as powders. A mixture of the compounds is preferably heated, for example in a furnace, to a temperature close to, but below, the melting point of the alkali metal carbonate corresponding to the alkali metal compound. The ratio of the carbonate and silicate used is preferably substantially equal to the stoichiometric ratio calculated on the basis that one mole of alkali metal oxide (written generically as "R₂O" in which R is as hereinbefore defined present in the alkali metal carbonate compound, is equivalent to one mole of silica (SiO₂) present in the magnesium silicate. For example, the stoichiometric mass ratio for the reaction between pure forsterite (Mg₂SiO₄, mol. wt. = 140) and pure anhydrous sodium carbonate (Na₂CO₃, mol. wt. = 106) would be 140:106. It will be understood that the actual silicate and carbonate sources used in practice will not always be pure, but the idealized stoichiometric ratio refers to that in which the heated mixture has an overall molar ratio of R₂O:SiO₂ substantially equal to unity.

The magnesium silicate and alkali metal carbonate compound used in the process of the present invention are preferably in particulate form or in shaped form, e.g. as pellets.

Rock used to provide the magnesium silicate and/or alkali metal carbonate compound for the process of the invention will generally be dried, crushed and, if necessary, ground (for example co-ground) to a desired particle size distribution. For example the magnesium silicate may be crushed to the granulometry of a fine sand (grain size 0.06 to 0.2mm) or, if necessary, ground to a fine powder (grain sizes below 0.06mm). Grain sizes greater than 0.06mm are generally determined by sieving. Grain sizes lower than 0.06mm are generally determined by laser granulometry. Undesirable mineral impurities can be separated to the extent consistent with energy efficiency by mechanical or other separation methods.

In one embodiment the process of the invention is conducted in a moving grate furnace. This procedure is especially suited to magnesium silicate rocks (rocks comprising mainly MgO and SiO₂) in which the MgO/SiO₂ molar ratio is close to or greater than 1.

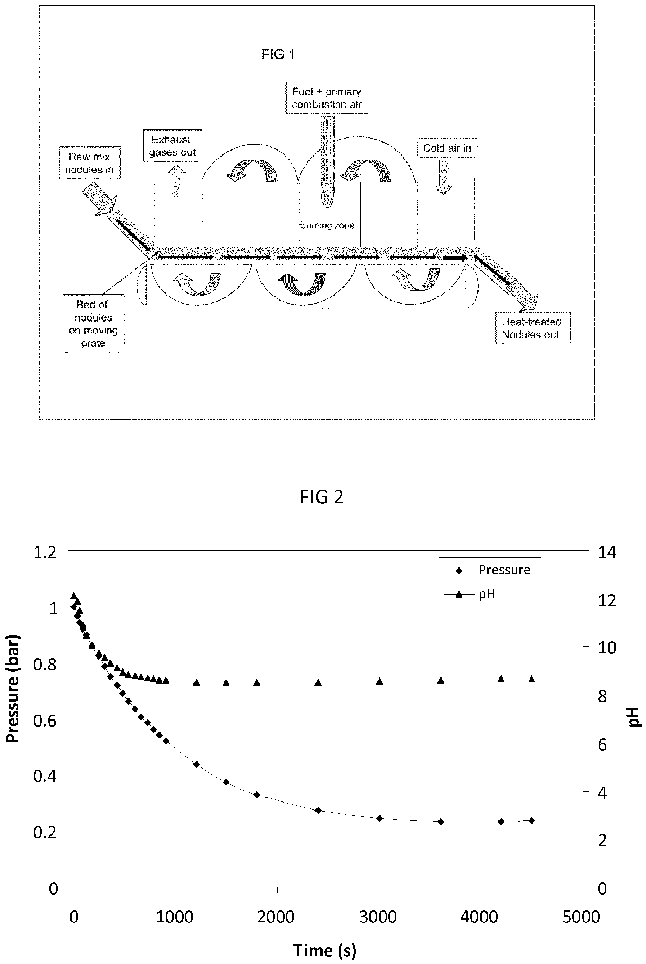

A mixture of alkali metal carbonate compound and magnesium silicate, each in particulate form, is formed into pellets (e.g. using a disc or drum pelletizer). Water may be added to the mixture to facilitate the pelletising process. The pellets are fed onto a moving grate comprising, for example, a high-temperature-resisting steel alloy, where they are heated, for example, by the passage of hot gases, for example fuel combustion gases. The hot gases may be drawn through the bed of pellets on the grate by fans, usually placed under the grate. The process is illustrated diagrammatically in Figure 1 of the accompanying drawings.

Typically, the hot gases are produced by burning, in an excess of air, a fossil fuel, such as natural gas, oil or coal; waste- or biomass-derived fuels, such as wood chips or waste fermentation gases, may also be used. Preferably the fuel used should have a low sulfur content, for example, <1%. The passage of hot gases through the bed heats the particles up, ultimately, to the desired temperature.

The rate of heating is controlled, for example, by varying the amount of fuel, the speed of the moving grate and/or the speed of the ventilation fans in order to ensure good overall energy efficiency and also to ensure that the pellets retain their mechanical integrity during the process. The moving grate is designed so that the gases may be passed through the bed several times along the length of the grate to allow for efficient heat transfer between the gases and the pellets, so that the gases leaving the furnace are as cool as possible. Moreover, once the pellets pass through the hottest zone ("burning zone") just after the combustion of the fuel, they are cooled by passing air through the bed, such that they reach as low a temperature as possible before being discharged from the bed. The incoming air, thus preheated by the outgoing solid particles, is used as the main air supply for combustion of fuel in the burning zone, thus leading to a high overall thermal efficiency for this type of furnace. The theoretical overall chemical reaction occurring during the heating process is shown below in equation (1a) for the reaction between forsterite (Mg₂SiO₄) and an alkali metal carbonate (R₂CO₃)

(1a) Mg₂SiO₄ + R₂CO₃ ⇒ MgO + R₂MgSiO₄ + CO₂↑

in which R is as hereinbefore defined. The more general form of this reaction can be written as in equation (1 b) for m>=1 and equation 1 (c) for m<1:

(1b) m(MgO)•t(QO)•SiO₂•xH₂O + R₂CO₃ ⇒ (m-1)MgO + R₂MgSiO₄ + tQO + CO₂↑ + xH₂O↑

(1c) m(MgO)•t(QO)•SiO₂•xH₂O + R₂CO₃ ⇒ (1-m)R₂SiO₃ + mR₂MgSiO₄ + tQO + CO₂↑ + xH₂O↑

wherein m is greater than or equal to 1 for reaction (1 b) and less than or equal to 1 for reaction (1 c); and Q, t and x are as hereinbefore defined. The vertical arrows T indicate that the carbon dioxide gas and water vapour produced by this reaction escape from the bed and exits with the rest of the exhaust gases. Thus, ideally, the final solid product remaining in the treated pellets is an intimate mixture comprising magnesium oxide (MgO also known as periclase) and alkali metal magnesium orthosilicate (R₂MgSiO₄) and/or alkali metal silicates (R₂SiO₃) as well as other solid products comprising the other metals (Q), especially iron, which may present as magnetite (Fe₃O₄) or possibly as an alkali metal ferrite (RFeO₂), calcium, which may be present as silicates, chromium, which may be present as alkali metal chromates (R₂CrO₄), and nickel, which may be present as oxides.

The idealized reactions depicted in equations (1 a,b,c) illustrate the production of alkali metal magnesium orthosilicates plus magnesium and/or other oxides and silicates by direct reaction of a stoichiometric (i.e. 1:1 R₂O:SiO₂) mixture of a magnesium silicate and an alkali metal carbonate.

This type of reaction is very endothermic, mainly due to the liberation of carbon dioxide gas: it consumes about 3.4 kJ (i.e. about 0.8 kcal) of heat per gram of CO₂ liberated. Thus, regardless of the temperature at which the reaction is conducted, there will be a significant net energy consumption for the overall process. However, if the reaction is conducted, as described above, in a furnace system which allows for good counter-current heat exchange between the outgoing hot gases and the incoming solids, and likewise between the outgoing hot solids and the incoming combustion air, the net energy consumption can be reduced to a value close to the theoretical limit given above. It is important, for energy efficiency, to have efficient counter-current heat exchange at both the beginning and the end of the process, incoming and outgoing, for example in a moving grate furnace as described above.

In a further embodiment, the process of the invention is conducted in a system comprising moving grates for pre-heating and cooling and a rotary kiln for the process of the invention which comprises a decarbonation step which produces carbon dioxide.

When a moving grate system is used it is important to maintain the solid in the form of suitably-sized pellets so that they form a porous bed on the grate, allowing for the passage of gases. The pellets preferably retain their mechanical integrity; they preferably also maintain their mean size within pre-determined limits.

According to a feature of the invention, in order to facilitate maintenance of the mechanical integrity of the pellets either (a) the maximum solids temperature in the process does not substantially exceed the melting point of the alkali metal carbonate corresponding to the alkali metal carbonate compound, and/or (b) the maximum solid volume fraction of melt-forming material (substantially alkali metal carbonate) in the pellets is generally below the value at which the nodule will deform significantly even if the alkali metal carbonate melts. This value is generally below about 35% of the total solids volume. However, since the reaction itself produces no liquid products (only solids and gases) at the temperatures preferably employed, the risk of the nodules deforming significantly due to melting is quite low even at far higher initial volume fractions of alkali metal carbonate as long as the heating occurs slowly enough to allow for a significant degree of reaction to occur before complete melting of the alkali metal carbonate.

According to a further feature of the invention the process of the invention is conducted in a suspension preheater system comprising a plurality of cyclones in a preheater and, for example, a rotary kiln, for example as used in a typical modern cement plant. The starting materials, for example as a mixed substantially dry powder, are fed (cold) into the top cyclone of the preheater. During its passage through the preheater cyclone tower, by counter-current heat exchange with kiln exit gases, the material is heated close to the melting point of the alkali metal carbonate corresponding to the alkali metal carbonate compound, but without reaching this melting point, in order to avoid, for example, the formation of accretions on the walls of the preheater. At the bottom of the preheater tower, the mixed powder enters a rotary kiln in which, as the temperature rises to the melting point of the alkali metal carbonate, the powder self-nodulizes. The ratio of alkali metal carbonate compound to magnesium silicate and/or the particle size distribution of the magnesium silicate and alkali metal carbonate compound in particulate form is chosen to promote self-nodulization. The nodules are then decarbonated in the rotary kiln. The decarbonated nodules are then cooled, for example on a moving grate cooler also as used in typical modern cement plants. The heat of the hot nodules can be used to preheat the incoming combustion air for the kiln by counter-current heat exchange.

The decarbonated and cooled pellets or nodules, comprising alkali metal magnesium orthosilicate and magnesium oxide or alkali metal silicate, are treated in order to separate the reaction products.

In the process of the invention the first product comprising alkali metal magnesium orthosilicate and magnesium oxide is contacted with water to form a second product by hydrating the magnesium oxide to magnesium hydroxide and to partially dissolve the alkali metal magnesium orthosilicate.

The first product as, for example pellets or nodules, is preferably quenched in an amount of water, such that the final mixture after quenching has a temperature close to, but not exceeding, about 100°C, i.e. enough to quench the solids but avoiding excessive evaporation of water. The hot quenched solids are then preferably crushed and agitated mechanically in the form of a slurry. More water may be added if necessary. Some additional heating may be necessary.

Alternatively the treatment with water, for example in the quenching and slurry-formation process described above, can be conducted at a temperature above 100°C if a pressurized vessel (e.g. an autoclave) is used.

Alternatively the above quenching and slurry-formation process can be conducted at lower or ambient temperatures. Water for converting the first product into the second product can optionally be recycled from another part of the process.

The objective is to separate the components of the second product by virtue of the facts that (a) alkali metal carbonates, silicates, chromates, sulfates and oxides or hydroxides in the product will tend to dissolve readily in water; (b) alkali metal magnesium orthosilicates will tend to hydrate in hot water to release alkali metals into solution as silicates and hydroxides, the remainder giving a fine suspension of solid magnesium silicate hydrates, and (c) magnesium oxide (MgO, also known as periclase) in the sample will tend to hydrate in hot water to give magnesium hydroxide (Mg(OH)₂, also known as brucite) to form a soft and easily-dispersible powder.

The slurry may need to be agitated mechanically. Then, the liquid phase can be separated from the bulk of the unreacted alkali metal magnesium orthosilicate and other unreacted anhydrous compounds, for example by sieving, and the fine particles of magnesium hydroxide and/or magnesium silicate hydrates which pass through the sieve as a slurry may be separated from the slurry by, for example, filtering, passage through a hydrocyclone, settling and/or centrifuging. The aqueous phase after separation of the magnesium hydroxide comprises an aqueous solution of alkali metal silicates and hydroxides.

Alternatively, the separation process may be conducted in two steps, the first step comprising a rapid washing process to remove most of the readily soluble alkali metal carbonates, silicates and hydroxides; and the second step, conducted with additional water, comprising further hydration of both the magnesium oxide and the alkali metal magnesium orthosilicate. In this two-step approach, the water temperature is preferably lower for the first step (for example lower than 60°C) than for the second step, and an autoclave may be used for the second step if necessary.

The overall result of the separation process described above can be summarized as follows: Solid products from the process of the invention, e.g. from the furnace or kiln, (for example, a mixture of larger particles of unreacted raw materials with R₂MgSiO₄, MgO or R₂SiO₃, QO, and possibly some residual R₂CO₃) are contacted with water to produce a second product comprising:
(a) a fine suspension comprising Mg(OH)₂ and/or magnesium silicate hydrates in a highly alkaline solution rich in alkali metal silicates, hydroxides and carbonates, and
(b) coarse unreacted solids comprising R₂MgSiO₄, MgO, QO and unreacted particles of the original magnesium silicate rock (e.g. Mg₂SiO₄), and which separate easily by sedimentation (e.g. in a hydrocyclone) from the fine suspension.
   The fine suspension can then be further separated (e.g. by filtration) to give
(c) fine solids rich in Mg(OH)₂ and/or magnesium silicate hydrates, and
(d) a solution rich in alkali metal silicates, hydroxides and carbonates, and also comprising minor amounts of alkali-soluble impurities, e.g. sulfates and chromates.

The initial part of the reaction of the solid products in the process with water can be written qualitatively as follows, for m≥1 (equation 2a), and m≤1 (equation 2b):

(2a) (m-1)MgO + R₂MgSiO₄ ⇒ (m-1)Mg(OH)₂ + "M-S-H" + 2R⁺ + (OH⁻, H₂SiO₄⁼, CO₃⁼)

(2b) (1-m)R₂SiO₃ + mR₂MgSiO₄ ⇒ "M-S-H" + 2R⁺ + (OH⁻, H₂SiO₄⁼, CO₃⁼)

In the above reactions, the main solid compounds produced are an amorphous magnesium silicate hydrate, "M-S-H", of variable composition, plus, in the case where m>1, magnesium hydroxide (brucite). The alkali metals may dissolve completely in the aqueous phase as alkali metal cations (R⁺), and the charge of these alkali metal cations is balanced by a mixture of three principal dissolved anions: hydroxide (OH⁻), silicate (H₂SiO₄⁼) and carbonate (CO₃⁼), present in various ratios depending on the conditions and materials used. It is to be understood that equations 2(a) and 2(b) are not perfectly balanced equations but rather are simply intended to indicate the main initial products of the reaction between the solid products of the process of the invention with water.

In a further embodiment of the invention the alkaline solution produced in step (d) is contacted with a carbon dioxide-containing gas, for example combustion exhaust gases, to absorb carbon dioxide and yield an alkali metal carbonate, alkali metal bicarbonate or a mixture thereof, generally in solution, and (precipitated) silica.

For example, the aqueous solution from step (d) comprising mainly alkali metal hydroxides and silicates and also some residual alkali metal carbonates is contacted with a carbon dioxide-containing gas, for example CO₂-rich combustion exhaust gases, such as the gases leaving the kiln used to heat-treat the pellets or nodules and those leaving the preheater. The solution rapidly absorbs CO₂ from such gases to produce a solution of alkali metal carbonates and bicarbonates, and a precipitate of amorphous silica, according to the following, or similar, equations:

(3) CO₂ (gas) + 2ROH (in solution) ⇒ R₂CO₃ (in solution)

(4) CO₂(gas) + R₂SiO₃ (in solution) ⇒ R₂CO₃ (in solution) + SiO₂ (solid precipitate)

(5) CO₂ (gas) + R₂CO₃ (in solution) ⇒ 2RHCO₃ (in solution)

The resulting solid silica precipitate is separated from the solution, for example by filtering, passage through a hydrocyclone, settling and/or centrifuging. In order to avoid an excessively fine amorphous silica precipitate which may cause the solution to gel completely or be too difficult to filter or separate, the concentration, the temperature of the solution during neutralization, and/or the rate of neutralization are controlled. Additional solutes, e.g. known salts, may also be incorporated into the solution. The precipitated silica formed by reaction (4) above can be separated, washed and dried for use in various applications.

It will be understood by mass balance that reactions (3) and (4) should in principle be able to absorb essentially all of the CO₂ released by the chemical reaction occurring in the process of the invention as shown in reaction (1), but that the additional CO₂ resulting from the combustion process required to heat the starting materials will require an additional reaction to absorb it completely, e.g. either a reaction such as (5), or a further reaction with another absorbent.

Magnesium hydroxide produced by the hydration of magnesium oxide prepared by the process of the invention also constitutes a feature of the invention. According to a further feature of the invention the magnesium hydroxide (preferably purified, for example by washing and drying) is calcined to produce magnesium oxide. It will be understood that the value of the magnesium hydroxide or magnesium oxide thus produced will depend mainly on the extent to which the major impurities (in this case, silica, iron compounds and alkali metal salts) are still present, which will be determined by the extent to which they are purified in additional steps such as washing and/or magnetic separation.

In a further embodiment of the invention, the magnesium oxide, or magnesium hydroxide produced by the hydration of magnesium oxide, is contacted with a carbon dioxide-containing gas, preferably in the presence of water, to form a magnesium carbonate compound. The rate of this reaction can be controlled by the temperature, the pressure, the relative humidity, the presence of catalysts and/or the type of reactor used. The carbonation reaction is represented by the reaction:

(6) CO₂ (gas) + MgO or Mg(OH)₂ ⇒ MgCO₃ (solid, possibly hydrated)

The products of this carbonation reaction may be either simple magnesium carbonates, such as magnesite (MgCO₃) or nesquehonite (MgCO₃•3H₂O), or complex magnesium hydroxy-carbonate hydrates, such as hydromagnesite (Mg(OH)₂•4MgCO₃•4H₂O), or artinite (Mg(OH)₂•MgCO₃•3H₂O), depending on the conditions employed.

In a further embodiment of the invention the coarse, partially reacted solids separated from the reaction products in step 1(b) above comprise mainly unreacted magnesium silicate (for example, Mg₂SiO₄) mixed with some intermediate products (for example, Na₂MgSiO₄). These can be dried and recycled to be mixed with additional raw magnesium silicate starting material for feeding back into the process. It will be understood that drying should be accomplished in an energy-efficient manner, e.g. first by drainage and then by use of waste heat from the furnace or other sources.

According to a further feature of the invention all of the solid products from the process of the invention, e.g. from the furnace or kiln (for example, a mixture of larger particles of unreacted raw materials with R₂MgSiO₄ and MgO and/or QO, and possibly some residual R₂CO₃ are ground together with water to produce a suspension or slurry which is then contacted with a gas containing carbon dioxide, for example CO₂-rich combustion exhaust gases, such as the gases leaving the kiln used to heat-treat the pellets or nodules and those leaving the preheater. During this treatment, in addition to the other reactions described above, (e.g. in equations (2), (3), (4), (5) and (6)), the alkali magnesium metal orthosilicate compound can also react directly with CO₂ as indicated by equations (7) and (8) below:

(7) R₂MgSiO₄ + 2CO₂ ⇒ MgCO₃ (solid) + SiO₂ (solid) + R₂CO₃ (in solution)

or, alternatively, making use of an alkali bicarbonate solution to achieve the same reaction:

(8) R₂MgSiO₄ + 4RHCO₃ ⇒ MgCO₃ (solid) + SiO₂ (solid) + 3R₂CO₃ (in solution)

The alkali metal bicarbonate RHCO₃ used in reaction (8) may be formed by the reaction of alkali metal carbonate solution R₂CO₃ produced in reaction (7) with carbon dioxide, as shown in equation (5).

Reactions of the type indicated by equations (7) and (8) may be conducted at ambient temperatures and pressures, or at elevated temperatures and pressures up to as high as 300 atmospheres and 300°C. Additional solid products, such as complex alkali metal magnesium carbonates, (e.g. eiteleite, Na₂CO₃•MgCO₃), may form and can be separated, either for re-use within the process or as useful products in their own right.

These types of reaction are capable of capturing a large amount of carbon dioxide and converting it into substantially stable solid products. The magnesium carbonate solid produced can be either simple magnesium carbonates, such as magnesite (MgCO₃) or nesquehonite (MgCO₃•3H₂O), or a complex magnesium hydroxy-carbonate hydrate, such as hydromagnesite (Mg(OH)₂•4MgCO₃•4H₂O), or artinite (Mg(OH)₂•MgCO₃•3H₂O), depending on the conditions and starting materials. The silica solid produced can be either a simple amorphous silica or a more complex mixed metal hydroxy-silicate such as a magnesium silicate hydrate ("M-S-H"). The alkali metal carbonate or bicarbonate solutions resulting from complete carbonation as shown in reactions (3), (4), (5), (7) and (8) can be concentrated, e.g. by evaporation, allowing the solids to be crystallized and then recycled to the start of the process. The solid mixture of magnesium carbonates and silica produced by these reactions is one of the final products of the overall process and, after washing if necessary to recover as much as possible of the soluble alkali metal salts, can be separated for disposal or for use in other processes.

The overall object of the process is to convert magnesium silicate rock into useful industrial products with low overall CO₂ emissions. A further benefit of the process is to capture gaseous CO₂ (e.g. from industrial flue gases) and convert it into a substantially stable mineral carbonate which comprises a magnesium carbonate compound. Below are some examples of some different ways in which the process can be used:
Starting with a magnesium silicate rock of composition m(MgO)•t(QO)•SiO₂•xH₂O, and recycling substantially all of the alkali metal (R) compounds used back into the process, at least two separate major product streams can be secured from amongst the following:
   (i) Products rich in magnesium oxide or hydroxide (MgO or Mg(OH)₂)
   (ii) Products rich in amorphous silica (SiO₂)
   (iii) Products rich in amorphous magnesium silicate hydrates (M-S-H)
   (iv) Products rich in magnesium carbonate compounds, e.g. either simple magnesium carbonates, such as anhydrous magnesium carbonate itself (MgCO₃ also known as magnesite); or magnesium carbonate trihydrate (MgCO₃•3H₂O, also known as nesquehonite); or magnesium hydroxy-carbonate hydrate, such as (Mg(OH)₂•4MgCO₃•4H₂O), also known as hydromagnesite, or (Mg(OH)₂•MgCO₃•3H₂O), also known as artinite.

Improved separation of the above major solid product streams can also be achieved by the application of other known mineral separation techniques such as, for example, flotation. Such flotation techniques can be effected using flotation aids including sodium oleate, carboxymethylcellulose and methyl isobutyl carbinol.

To the extent that CO₂ is produced by the combustion of fuels used in the process, e.g. to heat the kiln or furnace, or to dry materials, this CO₂ can be captured in the process in the form of product (iv) listed above, by using a treatment process based on the reactions shown above. To the extent that the process is energy-efficient, the aforesaid CO₂ produced by the combustion of fuels used in the process, even if substantially completely captured by reactions of the sort shown, for example, in equations (3), (4) and (5), will generally not be sufficient to convert all of the magnesium in the process to product stream (iv), leaving some of the magnesium available for the production of product streams (i) and (iii). However, in another embodiment of the process, additional CO₂ can be obtained from other sources and included in the treatment process and thus captured. In such a case, it is possible to operate the process in such a way that product stream (i) is not produced, but the process itself becomes a net consumer of CO₂. Moreover, it is also possible to operate the process without separating any of the product streams, so that the only product stream produced is a mixture of some or all of the above product streams

In a further approach, (not according to the invention), the process uses the same magnesium silicate raw material as shown above, but in this case, not all of the alkali metal-rich products of the process are recycled within the process. It is therefore possible to have one or more additional product streams as well as those already listed above. For example, one very useful product stream is an alkali metal silicate, (R₂SiO₃) either in the form of an alkaline aqueous solution also containing alkali metal hydroxides and/or carbonates, or as a solid product, (for example, obtained by evaporation and/or crystallization).

According to a feature of the invention the first product is contacted with water to produce a second product comprising magnesium hydroxide which process further comprises (i) carbonation of the second product to produce a carbonated third product and (ii) partial dehydration of the carbonated third product to produce a fourth product.

According to a further feature of the invention the first product is contacted with water to produce a second product comprising magnesium hydroxide which process further comprises (i) carbonation of the second product to produce a third product comprising magnesium hydroxide and an alkali metal carbonate and (ii) calcining the magnesium hydroxide from the third product to produce a fifth product comprising magnesium oxide.

A hydraulic binder, for example as described in WO2009/156740 A1, comprises the fourth product. The hydraulic binder may further comprise an alkali metal carbonate from the third product. The hydraulic binder may further comprise magnesium oxide from the fifth product.

The invention also provides a process in which a product comprising a transition metal such as iron, nickel and/or chromium compound is produced.

Another useful product stream is rich in transition metal oxides, for example iron oxides such as magnetite (Fe₃O₄ and which may also contain significant amounts of chromium and/or nickel oxides. These oxides can be concentrated by flotation and/or magnetic separation.

Another useful product stream is an alkaline solution containing chromates, which can be treated with a reducing agent and pH control (or by electrochemical reduction) to separate relatively pure chromium oxides, or even chromium metal; for example:
R₂CrO₄(aqueous solution) + (reducing agent) ⇒ Cr(OH)₃ (solid precipitate)

In this specification, including the accompanying claims, percentages unless otherwise indicated are by mass.

The term "pellets" as used in this specification including the accompanying claims is to be understood as embracing shaped, generally substantially spherical, forms such as pellets, nodules and granules.

Particle size distribution when measured by laser granulometry is measured using a Malvern MS2000 laser granulometer. Measurement is effected in ethanol. The light source consists of a red He-Ne laser (632 nm) and a blue diode (466 nm). The optical model is that of Mie and the calculation matrix is of the polydisperse type.

The apparatus is checked before each working session by means of a standard sample (Sifraco C10 silica) for which the particle size distribution is known.

Measurements are performed with the following parameters: pump speed 2300rpm and stirrer speed 800rpm. The sample is introduced in order to establish an obscuration between 10 and 20%. Measurement is effected after stabilisation of the obscuration. Ultrasound at 80% is first applied for 1 minute to ensure the de-agglomeration of the sample. After about 30s (for possible air bubbles to clear), a measurement is carried out for 15 s (15000 analysed images). Without emptying the cell, measurement is repeated at least twice to verify the stability of the result and elimination of possible bubbles.

All values given in the description and the specified ranges correspond to average values obtained with ultrasound.

It is to be understood that in the foregoing text, unless otherwise specified, the symbols R,Q, m, t, x and, p are as initially defined.

The following non-limiting Examples illustrate embodiments of the invention.

The following abbreviations and notations are used:
- XRF: X-ray fluorescence
- XRD: X-ray diffraction
- ICP: Inductively-Coupled Plasma Photometry
- Hydromagnesite: Mg(OH)₂•4MgCO₃•4H₂O
- Artinite: Mg(OH)₂•MgCO₃•3H₂O
- Eitelite: Na₂CO₃•Mg(CO₃)
- LOI: Loss on ignition

### EXAMPLE 1

Ground pure olivine sand (Mg_{0.94}Fe_{0.06})₂SiO₄ was mixed with sodium carbonate hydrate powder in a 14:11 mass ratio. The molar ratio of this mixture is close to 1:1. 25g of this powder was pressed into a pellet and placed into a lab furnace in a platinum crucible. It was heated up to 800°C over 2 hours, maintained at 800°C for 1 hour and cooled back to room temperature by natural cooling. In order to evaluate the reaction efficiency, separate samples of the sodium carbonate and olivine used underwent exactly the same heat treatment. The measured ignition losses are shown in the following Table.

| Sample | Loss on Ignition |
|---|---|
| Sodium carbonate powder | 14.97 % |
| Ground olivine sand | 0.22 % |
| 14:11 mix of ground olivine sand + sodium carbonate powder | 16.69 % |

The ignition loss of the pure sodium carbonate was due entirely to loss of hydrate water and not to decomposition or evaporation of the carbonate. The pure olivine sample remained essentially unchanged during heat treatment, but the mixed sample reacted. From the measured LOI data, it is estimated that 60% of the CO₂ from the carbonate was lost from the mixture. The phase constitution of the reacted sample was determined by XRD. The reaction products observed by this technique were Na₂MgSiO₄, MgO and Fe₂O₃ together with some unreacted olivine and sodium carbonate.

10g of the reacted sample was put into 100 ml of de-ionised water under constant stirring at 40°C for 1h in order to evaluate its dissolution behaviour. The solution was filtered and the solid residue was analysed by XRD. The amounts of dissolved elements in the aqueous solutions were measured by ICP.

The main solid phases detected in the filtered solid residue were Na₂MgSiO₄ MgO, Fe₂O₃ and olivine. All non-reacted sodium carbonate dissolved in the aqueous solution. Additionally, some dissolved SiO₂ was detected with a concentration of 667 mg/l. From this value, one can estimate that 2 to 3% of the total silica from the mixture dissolved in the water under these conditions, (presumed to be as a sodium silicate, as the pH of the solution was measured to be about 12).

### EXAMPLE 2

The same ground pure olivine sand (Mg_{0.94}Fe_{0.06})₂SiO₄ and sodium carbonate hydrate powder as used in Example 1 were mixed in a 1400:1235 mass ratio. The molar ratio of this mixture is approximately 1:1. The powder was pressed into pellets and placed (in a platinum crucible) into a lab furnace which was kept at 900°C. The sample was air-quenched after 1 h of heat treatment. Separate samples of the sodium carbonate and olivine used underwent an identical heat treatment. It is important to mention that at this temperature, sodium carbonate is in the liquid state. (The melting temperature of this compound is 851 °C). The measured loss on ignition of all of the samples is presented in the following Table.

| Sample | Loss on Ignition |
|---|---|
| Sodium carbonate | 14.96 % |
| Olivine | 0.04 % |
| Olivine + Sodium carbonate | 23.02 % |

From the measured LOI data, a conversion rate (degree of decarbonation) close to 100% was obtained which means that the reaction was essentially complete. The reaction product was analysed by XRD and the phases detected were Na₂MgSiO₄, MgO, NaFeO₂ together with some un-reacted olivine. No remaining sodium carbonate was detected, in agreement with the observed loss on ignition data. The MgO to Na₂MgSiO₄ mass ratio was estimated by Rietveld analysis of the XRD data to be 14:86, in reasonable agreement with mass balance calculations.

### EXAMPLE 3

13g of the powdered product of Example 2 was mixed with 260 ml of water to give a slurry with about 50g/L solids concentration. This slurry was put in a closed pressure reactor with a total volume of 2 litres, maintained at 25°C. The reactor was first evacuated and then filled with pure gaseous CO₂ up to one atmosphere pressure. The pressure of the gas and the pH of the aqueous solution were recorded as functions of time and are presented in Figure 2. The rate of pressure drop indicates that the slurry captures gaseous CO₂ rapidly, and, concurrently, the pH of the solution falls rapidly from an initial value of over 12 to a final value of about 8.5, consistent with the formation of a mixed sodium carbonate/bicarbonate solution. After this reaction the solids in the slurry were filtered and analysed by XRD. NaFeO₂ was no longer detectable and the MgO:Na₂MgSiO₄ ratio had increased to an estimated value of 18:82, indicating that some sodium silicate had leached out of the Na₂MgSiO₄ phase into the solution and had then been carbonated.

### EXAMPLE 4

5g of the powdered product of Example 2 was mixed with 200 ml of water to give a slurry of about 25g/L solids concentration. This slurry was then boiled gently for one hour, after which it was filtered and the solid residue analyzed by XRD. The relative concentration of the Na₂MgSiO₄ phase in the residue was clearly greatly reduced compared to the original untreated residue, and the relative concentration of MgO greatly increased. The NaFeO₂ phase had also completely disappeared but peaks for a layered double hydroxide phase probably having a formula close to 4MgO•Fe₂O₃•CO₂•10H₂O were seen clearly, together with weaker peaks for Fe₂O₃ (haematite) and unreacted olivine.

The liquid filtrate was also analyzed by ICP and the results (see the Table below) showed a high concentration (6.92 g/L as Na₂O) of sodium in solution, as well as 0.47 g/L of SiO₂. This confirms that most of the sodium had leached out of the sample, and that about 15% of it was probably in the form of a sodium metasilicate solution, the rest presumed to be a mixture of sodium hydroxide and sodium carbonate.

### Chemical analysis of the aqueous solution

| Chemical species | Concentration [mg/l] |
|---|---|
| SiO₂ | 466 |
| Al₂O₃ | 6.65 |
| Fe₂O₃ | 1.78 |
| CaO | 0.51 |
| MgO | 1.51 |
| K₂O | 2.40 |
| Na₂O | 6920 |
| SO₃ | 2.53 |
| P | 0.58 |

### EXAMPLE 5

The powdered product of Example 2 was mixed with water to give slurries (suspensions) with various solids concentrations, in some cases with the addition of various soluble salts to the initial aqueous solution. A sample of slurry was put in a closed reactor with a total volume of 1.65 litres, maintained at 35°C and agitated with a mechanical stirrer operating at 500rpm. The reactor was first evacuated and then filled with pure gaseous CO₂ up to one atmosphere pressure. The pressure of the gas, which decreased with time due to its absorption by the slurry, was recorded continuously. Whenever the pressure reached a relatively constant value, further CO₂ was added again to bring it back to one atmosphere. By following the change of pressure with time between refills, it was possible to estimate the total amount of CO₂ consumed by reaction with the slurry. Results for a series of such experiments are summarized in the following Table.

| Experiment n° | Total CO2 captured (mol) | Slurry volume (mL) | Slurry conc. (g/L) | Total solids. (g) | CO2 captured, as % of theoretical maximum | Slurry additives | Temp. (°C) | Duration (h) | Solid products detected |
|---|---|---|---|---|---|---|---|---|---|
| 1 | 0.0641 | 260 | 50 | 13.0 | 35 | Na2CO3: 21.15 g/L | 35 | 24 | Hydromagne site |
| 2 | 0.0724 | 260 | 50 | 13.0 | 40 | Na2CO3: 53.85 g/L | 35 | 24 | Hydromagne site |
| 3 | 0.1363 | 260 | 50 | 13.0 | 75 | NaHCO3: 53.85 g/L | 35 | 30 | Hydromagne site |
| 4 | 0.0352 | 260 | 11.5 | 2.99 | 84 | | 35 | 26 | Artinite |

The theoretical maximum CO₂ capture was calculated on the assumption that all of the carbonatable solids, expressed in terms of MgO and Na₂O in the solids, would carbonate to give MgCO₃ and Na₂CO₃, respectively, irrespective of any slurry additives present. However, it was observed that the main solid products were usually hydromagnesite and, in one case, artinite, which would imply a slightly lower amount of CO₂ capture than the maximum theoretical value. In experiment 4, during which no slurry additives were used (i.e. pure water was used to make the slurry) the amount of CO₂ captured, at 84% of theoretical, is actually slightly more than would be expected if artinite were the main magnesium carbonate formed, so it is likely that other carbonates were also formed but not detected. In any case, the result of experiment 4 shows that it is possible to essentially fully carbonate an aqueous suspension of the reaction product of Example 2 in about one day at atmospheric pressure. (Note also that the duration of these experiments was probably longer than necessary because they had to be left overnight unattended, during which time no additional CO₂ could be added to bring the pressure back up. If one atmosphere pressure of CO₂ had been maintained continuously, the reaction times would probably have been significantly shorter).

### EXAMPLE 6

A crushed sample of serpentine from Horsmanaho, Finland (ground in a ball mill to a powder with 43% passing a 75 micrometre sieve, and containing, by mass, 37.9% silicon expressed as SiO₂, 38.7% magnesium expressed as MgO, 7.4% iron expressed as Fe₂O₃, and with an ignition loss of 14.9% at 950°C), was mixed with anhydrous sodium carbonate powder in a 5355:4645 mass ratio (molar ratio approximately 1:1.3). About 5kg of the mixed powder was pressed into a steel crucible and calcined in a lab furnace at 950°C for 4.5 hours. The mass loss during calcination was 27.9%. From the measured mass loss it can be estimated that the decarbonation reaction was complete. The reaction product was analysed by XRF spectrometry and shown to contain 27.8% silicon expressed as SiO₂, 30.4% magnesium expressed as MgO, 5.7% iron expressed as Fe₂O₃ and 33.4% sodium expressed as Na₂O. An XRD analysis showed the major phases present in the product to be Na₂MgSiO₄ and periclase (MgO).

### EXAMPLE 7

The reaction products of Example 2 (referred to hereinafter as "product X") and of Example 6 (referred to hereinafter as "product XS") were ground to powders, and the finenesses of the resulting powders were measured using the Blaine Specific Surface Area (BSS) method. For each sample of product X or XS, 75g of the solid were added to 1.5 litres of deionized water in a glass reactor equipped with a stirrer with a helicoidal Teflon® paddle operating at 500rpm. Pure CO₂ gas was bubbled continuously through the agitated suspension (via a porous glass frit at the bottom) at a flow rate of 12 normal litres per hour at close to one atmosphere absolute pressure. The reactor contents were maintained at 70°C by a jacket heated by circulating hot water. After various periods of time, samples of the suspension were taken to assess the progress of the carbonation reaction. The samples were filtered and the liquid filtrates were analysed for dissolved elements by ICP. The solid filter-cakes were dried at 110°C and then analysed by XRF spectrometry for elemental composition, by XRD for qualitative phase composition, and by thermal analysis coupled with evolved gas analysis for the quantitative detection of combined CO₂ and water. In order to calculate the amount of magnesium that had reacted, it was assumed that all of the CO₂ in the dried filter-cake was present in the form of hydromagnesite.

The results for three different product samples are given in the following Table

| Experiment N° ; anhydrous product used | Duration (h) | Blaine specific surface area of anhydrous product, m²/kg | Main crystalline phases detected in dried filter-cake | Total Mg content of dried filter-cake, expressed as MgO, % | CO₂ content of dried filter-cake, % | Estimated Mg in hydromagnesite expressed as %MgO in filter-cake | Mg in aqueous phase expressed as %MgO relative to filter-cake | Estimated degree of reaction of MgO in anhydrous product, % |
|---|---|---|---|---|---|---|---|---|
| 5 Product X | 3.5 | 420 | Hydromagnesite | 31.2 | 15.9 | 18.2 | 0.6 | 59 |
| 6¹ Product X | 4.0 | 600 | Hydromagnesite | 30.3 | 16.4 | 18.8 | 0.5 | 63 |
| 7 Product XS | 4.0 | 205 | Hydromagnesite | 27.7 | 17.2 | 19.7 | 0.4 | 71 |

| | | | | | | | | |
|---|---|---|---|---|---|---|---|---|
| (1) In experiment 6, a high-power agitation system was used instead of the normal stirrer | | | | | | | | |

It can be seen from the above results that it is possible to carbonate products X and XS at only one atmosphere pressure in aqueous suspension and obtain conversion yields of the order of 60-70% of the total magnesium in the starting material in about 3.5 to 4 hours. Based on XRF analyses of the solid phases coupled with ICP analyses of the liquid phase, it is estimated that roughly 90% of the initial Na and 50% of the initial Cr in the product leached out during the experiment.

### EXAMPLE 8

### Formation of eitelite.

The procedure of Example 7 was repeated using two slurries (prepared from products X and XS from Examples 2 and 6, respectively) at a concentration of 150g/L, i.e. three times the concentration used in Example 7.

During the 3 first hours the same trends were observed as those in Example 7. But after 4 hours, XRD revealed the presence of eitelite as well as hydromagnesite. The results are given in the following Table.

| Experiment N° ; anhydrous product used | Duratio n (h) | Blaine specific surface area of anhydrous product, m²/kg | Main crystalline phases detected in dried filter-cake | Total Mg content of dried filter-cake, expressed as MgO, % | CO₂ content of dried filter-cake, % | Estimated Mg in hydromagnesite expressed as %MgO in filter-cake | Mg in aqueous phase expressed as %MgO relative to filter-cake | Estimated degree of reaction of MgO in anhydrous product, % |
|---|---|---|---|---|---|---|---|---|
| 8 Product X | 4.0 | 600 | Hydromagnesite & eitelite | 28.06 | 16.45 | 18.83 | 0.5 | 67.12 |
| 9 Product XS | 4.0 | 600 | Hydromagnesite & eitelite | 25.74 | 15.82 | 18.11 | 0.8 | 70.37 |

### EXAMPLE 9

### Effectiveness of water leaching

50g of product X was washed in 1 L deionised water 6 times in series (15minutes stirring in between at room temperature and atmospheric pressure, i.e. 25°C and 1 bar). Each time a small sample was taken to analyse the solids and the liquids. The XRF results for product X coupled with ICP solution analyses lead to the results given in the following Table, which the percentages of each element leached from the product are given as a function of the number of washing steps.

| **% leached** | **Si** | **Ca** | **Mg** | **K** | **Na** | **S** | **Cr** |
|---|---|---|---|---|---|---|---|
| **Washing 1** | 9.85 | 0.46 | 0.00 | 19.76 | 36.44 | 13.77 | 46.12 |
| **Washing 2** | 3.20 | 0.09 | 0.00 | 1.94 | 8.69 | 0.60 | 1.30 |
| **Washing 3** | 1.41 | 0.02 | 0.00 | 0.25 | 3.47 | 0.04 | 0.21 |
| **Washing 4** | 1.22 | 0.02 | 0.00 | 0.03 | 3.53 | 0.13 | 0.32 |
| **Washing 5** | 0.75 | 0.02 | 0.00 | 0.02 | 1.87 | 0.14 | 0.12 |
| **Washing 6** | 0.51 | 0.05 | 0.00 | 0.00 | 1.30 | 0.05 | 0.08 |
| **TOTAL** | 16.94 | 0.66 | 0.01 | 22.00 | 55.31 | 14.73 | 48.15 |

The first washing step was clearly the most efficient. Therefore 500g of product X were washed in the same conditions, the solid was then filtered and dried overnight at 110°C. Finally the same carbonation experiment as described in Example 8 was performed on this solid product. This time XRD analysis revealed only hydromagnesite; no eitelite was detected. This shows that washing can be used to enhance Na recycling in the process.

The analysis of the solution obtained after the first washing (table below) showed it to have a high pH and to contain about 4000mg/L of Na and 637 mg/L of Si, the other elements being present in much smaller amounts. On this basis, the solution was estimated to contain about 23 milimoles/litre of sodium metasilicate (Na₂SiO₃ and 130 millimoles/litre of sodium hydroxide (NaOH), possibly also including some carbonate ions.

| **In mg/l (elements)** | **Si** | **Ca** | **Mg** | **K** | **Na** | **S** | **Cr** |
|---|---|---|---|---|---|---|---|
| **Washing 1** | 637.5 | 0.299 | 0.267 | 4.1 | 4000 | 1.38 | |

### EXAMPLE 10

### Hydromagnesite formation at 60°C

1 L of a 50g/L slurry of product X was prepared and poured into a 2L autoclave. The system was closed and 1 L of pure CO₂ at 10 bars was added without purging the residual air, after which the slurry was stirred and heated up to 60°C (which roughly corresponds to the dew point of exhaust gases in a cement plant). After 2 hours the pressure dropped to close to atmospheric and heating of the autoclave was stopped. The next day, the slurry was filtered and dried overnight at 110°C. XRD revealed hydromagnesite as the main crystalline product.

### EXAMPLE 11

### Formation of magnesite as main product at 120°C.

The procedure of Example 10 was repeated but at 120°C (a typical temperature for exhaust gases from a cement plant) using the same autoclave, and adding CO₂ each time the pressure dropped close to two bars (the equilibrium water vapour pressure at 120°C). Three additions of CO₂ up to 10 bars were made in the space of one day. XRD on the dried solid revealed magnesite (MgCO₃ to be the main product, but also showed some traces of magnetite (Fe₃O₄). ICP analysis of the aqueous phase showed 90% leaching of Na. The combined CO₂ content in the solids was analysed by means of a high-frequency induction furnace coupled to a Horiba EMIA-820V gas analyser and showed that the amount of MgCO₃ present accounted for about 47% of the original Mg in Product X.

### EXAMPLE 12

### Selective separation of chromium by reduction in solution.

Powdered product X was stirred with deionised water for 15 minutes at a 2:1 water:solids mass ratio. The yellow-coloured aqueous phase was filtered and a sample taken for ICP analysis. Excess ferrous sulfate (FeSO₄), a reducing agent, was then added in powder form to the solution, after which a chromium-containing precipitate formed. The liquid was again filtered, giving a colourless solution which was again analysed by ICP. The chromium content of the yellow-coloured aqueous phase was 772 mg/L. The colourless solution contained only 29 mg/L of chromium.

These results, when compared with the analysis of the raw materials, indicated that about 50% of the total chromium in the original raw material (olivine) was converted into a readily soluble (chromate) form by the process used to make "product X," and 96% of the Cr leached into the solution was precipitated by addition of ferrous sulfate.

### EXAMPLE 13

### Concentration of hydromagnesite from the solid residues by flotation

Separation tests were performed by flotation on the carbonated products produced from the application of the process to olivine and serpentine, similarl to the products shown, respectively, for experiments 5 and 7 in the table of Example 7. Combinations of sodium oleate, carboxymethylcellulose (CMC) and methyl isobutyl carbinol (MIBC) were used in the aqueous phase sequentially to disperse the solids in the form of a slurry at a solids concentration of 90g/L.

First sodium oleate was added to the slurry and stirred for 5 minutes in a beaker in order to render carbonated particles hydrophobic. Then CMC was added to depress silicate hydrophobicity, followed by a further 5 minutes of stirring; and finally MIBC was added in order to stabilise the foam formed by air bubbling.

Air was bubbled through the treated slurry in a miniature flotation cell, and the solids carried over by the foam were collected as "concentrate." The residual solids were collected as "tailings." Results of four such experiments are presented in the table below. The CO₂ content was analysed by means of a high-frequency induction furnace coupled to a Horiba EMIA-820V gas analyser. The CO₂ contents of the concentrates were typically 3-4 times greater than those of the tailings, showing that hydromagnesite can be effectively separated by flotation in this manner.

The XRD results confirm the separation. They are expressed in a qualitative way by different symbols expressing the probability of a phase presence:
- (o) not present,
- (*) possibly present,
- (X) definitely present,
- (X+) present in abundance.

| **Chemical additive (dosage, ppm)** | | | **Test 1** | | **Test 2** | | **Test 3** | | **Test 4** | |
|---|---|---|---|---|---|---|---|---|---|---|
| **Sodium oleate** | | | 1500 | | 1000 | | 2000 | | 1000 | |
| **CMC** | | | 200 | | 200 | | 200 | | 200 | |
| **MIBC** | | | 20 | | 20 | | 20 | | 20 | |
| **Product tested by flotation:** | | | **Carbonated "product X"** | | **Carbonate "product X"** | | **Carbonated "product X"** | | **Carbonated "product XS"** | |
| **Results of flotati on tests** | | | **Tailings** | **Con centrate** | **Tailings** | **Concentrate** | **Tailings** | **Concentrate** | **Tailings** | **Concentrate** |
| **Components measured by chemical analysis** | | **SiO2** % | **34.1** | **17.6** | **33.7** | **18.5** | **33.8** | **22.0** | **33.3** | **16.9** |
| | | **Fe2O3** % | 6.4 | 3.4 | 6.4 | 3.6 | 6.4 | 4.3 | 6.9 | 3.0 |
| | | **MgO** % | **34.6** | **37.2** | **34.5** | **37.2** | **33.9** | **36.9** | **29.2** | **35.9** |
| | | **Na2O** % | 2.3 | 1.3 | 2.3 | 1.4 | 2.6 | 1.3 | 2.3 | 1.2 |
| | | **LOI** % | 22.3 | 40.0 | 22.6 | 38.9 | 22.7 | 35.1 | 26.2 | 41.6 |
| | | **CO2** % | **5.7** | **22.2** | **5.8** | **20.2** | **5.7** | **17.3** | **9.4** | **23.0** |
| **Phases detected by XRD** | **Sodium magnesium silicate** | | 0 | 0 | 0 | 0 | 0 | 0 | 0 | 0 |
| | **Periclase** | | **X** | ***** | **X** | ***** | **X** | ***** | ***** | ***** |
| | **Olivine** | | **X** | ***** | X | ***** | **X** | ***** | 0 | 0 |
| | **Hydromagnesite** | | **X** | **X+** | **X** | **X+** | **X** | **X+** | **X** | **X+** |

### EXAMPLE 14

(not according to the invention) Ground natural talc from Luzenac (France) with nominal composition Mg₃Si₄O₁₀(OH)₂ and containing some minor impurities (1.1% Al₂O₃, 0.9 % Fe₂O₃ and 0.9% CaO by mass) was mixed with anhydrous sodium carbonate (Na₂CO₃) at a 4863:5136 mass ratio (molar ratio approximately 1:1). The composition was chosen in order to obtain an atomic ratio of 2:1 Na:Si in the final sample. 20.5g of this powder was pressed into a pellet and placed into a lab furnace in a platinum crucible. The sample was heated at 900°C for 1 hour, followed by cooling in air. It was weighed before and after treatment and the measured loss on ignition of 23.3% was consistent with evaporation of carbon dioxide from the sodium carbonate plus bound water from the talc; it represents about 95% of the theoretical value for complete reaction of 24.6%. The phase constitution of the reacted sample was determined by X-ray diffraction: the main products detected were Na₂MgSiO₄ and Na₂SiO₃.

## Claims

1. A process for the treatment of a silicate mineral comprising:
- a first step of preparation of a first product comprising an alkali metal magnesium orthosilicate and a magnesium oxide, which step comprising the reaction, at a temperature from 500 to 1200°C, of an alkali metal carbonate compound, which compound is an alkali metal carbonate, an alkali metal bicarbonate or a mixture thereof, with a magnesium silicate, the molar ratio of alkali metal carbonate compound, expressed as alkali metal oxide of the formula F₂O, in which R represents an alkali metal, to magnesium silicate, expressed as silicon dioxide, of the formula SiO₂, being from 4:1 to 1:4,
- a second step of contacting the first product with water to produce a second product by hydrating the magnesium oxide to magnesium hydroxide and to partially dissolve the alkali metal magnesium orthosilicate,
and
- a third step of isolating or producing magnesium oxide, magnesium hydroxide from the second product

2. A process according to claim 1 in which the magnesium silicate is a magnesium silicate in which the molar ratio of magnesium oxide to silica is from 1 to 3.

3. A process according to any one of claims 1 to 2 in which the magnesium silicate comprises a magnesium silicate rock of the general composition:
m(MgO)•t(QO)•SiO₂•xH₂O
wherein m is from 1 to 3, t is less than or equal to 1, x is from zero to 2, and Q represents a metal or metals other than magnesium.

4. A process according to any one of the preceding claims further comprising subsequent steps of (i) carbonation of the second product to produce a carbonated third product and (ii) partial dehydration of the carbonated third product to produce a fourth product.

5. A process according to any one of claims 1 to 3 further comprising subsequent steps of (i) carbonation of the second product to produce a third product comprising magnesium hydroxide and an alkali metal carbonate and (ii) calcining the magnesium hydroxide in the third product to produce a fifth product comprising magnesium oxide.

6. A process according to claim 3 in which Q represents iron, nickel and/or chromium which process further comprises isolation of an iron, nickel or chromium compound,

## Patentansprüche

1. Verfahren zur Behandlung eines Silikatminerals, umfassend:
- einen ersten Schritt zur Herstellung eines ersten Produkts, umfassend ein Alkalimetall-Magnesium-Orthosilikat und ein Magnesiumoxid, wobei der Schritt die bei einer Temperatur von 500°C bis 1200°C erfolgende Umsetzung einer Alkalimetallcarbonat-Verbindung, bei der es sich um ein Alkalimetallcarbonat, Alkalinetallbicarbonat oder ein Gemisch davon handelt, mit einem Magnesiumsilikat umfasst, wobei das molare Verhältnis der Alkalimetallcarbonat-Verbindung, ausgedrückt als Alkalimetalloxid der Formel R₂O, worin R ein Alkalimetall darstellt, zu dem Magnesiumsilikat, ausgedrückt als Siliciumdioxid der Formel SiO₂, 4:1 bis 1:4 beträgt,
- einen zweiten Schritt des Inkontaktbringens des ersten Produkts mit Wasser, um ein zweites Produkt zu erzeugen, indem man das Magnesiumoxid zu Magnesiumhydroxid hydratisiert, und um das Alkalimetall-Magnesium-Orthosilikat partiell zu lösen,
und
einen dritten Schritt zum Isolieren oder Produzieren von Magnesiumoxid, Magnesiumhydroxid aus dem zweiten Produkt.

2. Verfahren nach Anspruch 1, bei dem das. Magnesiumsilikat ein Magnesiumsilikat ist, bei dem das molare Verhältnis von Magnesiumoxid zu Siliciumdioxid 1 bis beträgt.

3. Verfahren nach einem der Ansprüche 1 bis 2, bei dem das Magnesiumsilikat ein Magnesiumsilikat-Gestein der folgenden allgemeinen Zusammensetzung umfasst:
m(MgO) • t(QO) • SiO₂ • xH₂O
wobei m 1 bis 3 beträgt, t kleiner als oder gleich 1 ist, x Null bis 2 ist, und Q ein anderes Metall oder andere Metalle als Magnesium darstellt.

4. Verfahren nach einem der vorstehenden Ansprüche, ferner umfassend die nachfolgenden Schritte (i) der Karbonisierung des zweiten Produkts zur Herstellung eines karbonisierten dritten Produkts und (ii) der partiellen Dehydratisierung des karbonisierten dritten Produkts, um ein viertes Produkt herzustellen.

5. Verfahren nach einem der Ansprüche 1 bis 3, ferner umfassend die nachfolgenden Schritte (i) der Karbonisierung des zweiten Produkts zur Herstellung eines dritten Produkts, umfassend Magnesiumhydroxid und ein Alkalimetallcarbonat, und (ii) des Kalzinierens des Magnesiumhydroxids in dem dritten Produkt, um ein fünftes Produkt herzustellen, das Magnesiumoxid umfasst.

6. Verfahren nach Anspruch 3, wobei Q Eisen, Nickel und/oder Chrom darstellt, und wobei das Verfahren ferner die Isolierung einer Eisen-, Nickel- oder Chromverbindung umfasst.

## Revendications

1. Procédé pour le traitement d'un mineral silicate, comprenant :
- une première étape de préparation d'un premier produit comprenant un orthosilicate d'un métal alcalin et de magnésium et un oxyde de magnésium, cette étape comprenant la réaction, à une température de 500 à 1200°C, d'un composé carbonate d'un métal alcalin, lequel composé étant un carbonate d'un métal alcalin, un bicarbonate d'un métal alcalin ou un de leurs mélanges, avec un silicate de magnésium, le rapport en moles du composé carbonate d'un métal alcalin, exprimé en oxyde d'un métal alcalin de formule R₂O dans laquelle R représente un métal alcalin, au silicate de magnésium, exprimé en dioxyde de silicium de formule SiO₂, étant de 4:1 à 1:4,
- une deuxième étape de mise en contact du premier produit avec de l'eau pour produire un deuxième produit par hydratation de l'oxyde de magnésium en hydroxyde de magnésium, et pour dissoudre partiellement l'orthosilicate d'un métal alcalin et de magnésium,
et
- une troisième étape d'isolement ou de production d'oxyde de magnésium, d'hydroxyde de magnésium, à partir du deuxième produit.

2. Procédé selon la revendication 1, dans lequel le silicate de magnésium est un silicate de magnésium dans lequel le rapport en moles de l'oxyde de magnésium à la silice est de 1 à 3.

3. Procédé selon l'une quelconque des revendications 1 à 2, dans lequel le silicate de magnésium comprend une roche de silicate de magnésium ayant la composition générale :
m(MgO).t(QO).SiO₂.xH₂O
dans laquelle m varie de 1 à 3, t est inférieur ou égal à 1, x varie de zéro à 2, et Q représente un ou plusieurs métaux autres que le magnésium.

4. Procédé selon l'une quelconque des revendications précédentes, qui comprend en outre des étapes subséquentes (i) de carbonatation du deuxième produit pour produire un troisième produit carbonaté, et (ii) de déshydratation partielle du troisième produit carbonaté pour produire un quatrième produit.

5. Procédé selon l'une quelconque des revendications 1 à 3, qui comprend en outre les étapes subséquentes (i) de carbonatation du deuxième produit pour produire un troisième produit comprenant de l'hydroxyde de magnésium et un carbonate d'un métal alcalin, et (ii) de calcination de l'hydroxyde de magnésium dans le troisième produit pour produire un cinquième produit comprenant de l'oxyde de magnésium.

6. Procédé selon la revendication 3, dans lequel Q représente le fer, le nickel et/ou le chrome, lequel procédé comprenant en outre l'isolement d'un composé du fer, du nickel ou du chrome.
